(19) Europäisches Patentamt
European Patent Office
Office européen des brevets

(11) EP 4 682 206 A1

(12) **EUROPEAN PATENT APPLICATION**

(43) Date of publication:
**21.01.2026 Bulletin 2026/04**

(21) Application number: **24189473.2**

(22) Date of filing: **18.07.2024**

(51) International Patent Classification (IPC):
***C08L 81/02*** *(2006.01)* ***C08L 53/02*** *(2006.01)*
***C08K 9/06*** *(2006.01)* ***C08K 7/14*** *(2006.01)*

(52) Cooperative Patent Classification (CPC):
(C-Sets available)
**C08K 3/22;** C08K 2003/2224; C08K 2201/005
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **DU, Yinlong**
  **Shanghai, 201319 (CN)**
- **SONG, Shijie**
  **Shanghai, 201319 (CN)**
- **CHEN, Haiming**
  **Shanghai, 201319 (CN)**
- **LIU, Xing**
  **Shanghai, 201319 (CN)**

(74) Representative: **Modiano, Gabriella Diana et al**
**Modiano & Partners SA**
**Steinsdorfstraße 14**
**80538 München (DE)**

# (54) POLYPHENYLENE SULFIDE COMPOSITIONS WITH HIGH VOLTAIC TRACKING RESISTANCE AND IMPROVED IMPACT STRENGTH

(57) Thermoplastic compositions include: a) from about 20 wt% to about 50 wt% of a PPS (polyphenylene sulfide) polymer; b) from about 0.1 wt% to about 15 wt% of an at least partially hydrogenated hydrocarbon polymer; c) from about 25 wt% to about 50 wt% of a magnesium hydroxide filler which is surface treated with an organosilane-based coating, and which has a primary average particle size of no more than 2 μm, wherein average particle size is determined by scanning electron microscopy; and d) from about 20 wt% to about 40 wt% of a reinforcing fibrous filler. The compositions have high voltaic tracking resistance and improved impact strength.

EP 4 682 206 A1

(52) Cooperative Patent Classification (CPC): (Cont.)

C-Sets
**C08L 81/02, C08L 53/02, C08K 9/06, C08K 7/14;**
**C08L 81/02, C08L 53/02, C08K 9/06, C08K 7/14, C08K 3/22**

**Description**

## FIELD OF THE DISCLOSURE

The present disclosure relates to thermoplastic compositions including a polyphenylene sulfide (PPS) polymer, and in particular to compositions including PPS, a hydrocarbon polymer, and a magnesium hydroxide filler that have high voltaic tracking resistance and impact strength properties.

## BACKGROUND OF THE DISCLOSURE

Polyphenylene sulfide (PPS) resin is a high-performance engineering thermoplastic that provides features such as high heat resistance, excellent chemical resistance, flame retardancy, dimensional stability, mechanical strength, and dielectric and electrical insulation properties. These attributes make PPS an ideal material for a broad scope of applications in automotive, infrastructure, healthcare, water management, electric and electronic components. As new energy vehicles (EV) and battery technologies have developed rapidly in the past few years, materials to support fast charging and long cruising range are required. In this context, high voltage platforms for EV are now under development to improve energy consumption efficiency. In the fields of high voltage and current density applications-particularly where the power and working temperatures are continually increasing-plastic components in devices in this field are required to exhibit higher heat resistance, flame resistance, and electrical insulating properties to ensure safety. PPS materials, which have a long-term service temperature above 200 °C and good retention of properties in aging conditions, are desirable over other engineering thermoplastics including polybutylene terephthalate (PBT), and aliphatic polyamide and semi-aromatic polyamide (PA or PPA).

However, compared with polyamides and polyesters, PPS resin exhibits weak tracking resistance to breakdown when high voltage is applied on its surface, possibly due to the easier char formation and higher char residues under high voltage. This breakdown can result in a conductive pathway on the surface of a molded part. As a result, the application of PPS is greatly limited in applications in which the components are exposed to high voltage. Recently, a few approaches or solutions have been proposed to increase the tracking resistance-in particular the comparative tracking index (CTI) properties-of PPS resin. One effective and commonly used method is to add metal hydroxide fillers such as magnesium hydroxide $Mg(OH)_2$ or aluminum hydroxide $Al(OH)_3$ to the PPS resin; these fillers can help the PPS compositions achieve a high tracking resistance.

For example, patent publication JP2001288363A describes a polyphenylene sulfide resin composition including PPS resin, fibrous filler, and magnesium hydroxide having a specific primary particle diameter (less than 1 μm) to improve tracking resistance. The PPS composition has improved tracking resistance without deteriorating the original physical properties, such as heat resistance, electric insulating property and low water absorption.

International Published Patent Application WO 2013046682A1 describes a PPS composition having improved tracking resistance without a substantial deterioration in various properties, including mechanical strength. This PPS composition includes a PPS resin, a polyamide resin, and a metal hydroxide. The metal hydroxide is dispersed in the composition such that the average secondary particle diameter of the metal hydroxide is 5 μm or less. The polyamide helps to improve improved tracking resistance and mechanical strength of the PPS composition.

Similarly, patent publication JP2019147943A describes a PPS composition including a PPS resin, a polyamide resin, an elastomer, and magnesium hydroxide to achieve excellent tracking resistance. The PPS composition has good mechanical strength, low die contamination and tracking resistance.

These conventional compositions have achieved good tracking resistance with a CTI value of from 400V to 600V. However, none of these compositions have good toughness properties. In particular, impact strength is reduced due to the large amount of magnesium hydroxide included in the compositions. As a result, the compositions are brittle, and molded components are subject to potential cracking. Patent publication CN115895261A describes a PPS composition with good CTI performance that includes PPS resin, glass fiber, a carbonization inhibitor (magnesium hydroxide), a flow modifier, a toughening agent, a lubricant and an anti-oxidant. The PPS compositions in this publication have high fluidity, high impact resistance and high CTI value, which purports to make them suitable for manufacturing high performance electronic and electrical products. However, the compositions having a CTI of 600V only have a notched impact strength value of about 5.5 $kJ/m^2$. This is not sufficiently high for structural components having high mechanical performance requirements.

These and other shortcomings are addressed by aspects of the present disclosure.

## SUMMARY

Aspects of the disclosure relate to thermoplastic compositions including: a) from about 20 wt% to about 50 wt% of a PPS (polyphenylene sulfide) polymer; b) from about 0.1 wt% to about 15 wt% of an at least partially hydrogenated hydrocarbon polymer; c) from about 25 wt% to about 50 wt% of a magnesium hydroxide filler which is surface treated with

an organosilane-based coating, and which has a primary average particle size of no more than 2 μm, wherein average particle size is determined by scanning electron microscopy; and d) from about 20 wt% to about 40 wt% of a reinforcing fibrous filler. The compositions have high voltaic tracking resistance and improved impact strength.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyphenylene sulfide polymer" includes mixtures of two or more polyphenylene sulfide polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including

the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either

commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: a) from about 20 wt% to about 50 wt% of a PPS (polyphenylene sulfide) polymer; b) from about 0.1 wt% to about 15 wt% of an at least partially hydrogenated hydrocarbon polymer; c) from about 25 wt% to about 50 wt% of a magnesium hydroxide filler which is surface treated with an organosilane-based coating, and which has a primary average particle size of no more than 2 $\mu$m, wherein average particle size is determined by scanning electron microscopy; and d) from about 20 wt% to about 40 wt% of a reinforcing fibrous filler. The combined weight percent value of all components does not exceed 100 wt%, and all weight percent values are based on the total weight of the composition.

As used herein, polyphenylene sulfide refers to a polymer having a symmetrical, rigid backbone chain including recurring aromatic rings linked by sulfides. In some aspects the PPS polymer includes a linear PPS polymer, a branched PPS polymer, a cross-linked PPS polymer, or a combination thereof. In particular aspects the composition includes at least two PPS polymers. In certain aspects the PPS polymer has an MFR (melt flow rate) of from 100 g/cm$^3$ (grams per cubic centimeter) to 1000 g/cm$^3$ as tested in accordance with ASTM D1238 at a temperature of 315 °C and a load of 5 kg (kilograms).

The composition includes from about 20 wt% to about 50 wt% of the PPS polymer. In further aspects the composition includes at least 20 wt%, or at least 21 wt%, or at least 22 wt%, or at least 23 wt%, or at least 24 wt%, or at least 25 wt%, or at least 26 wt%, or at least 27 wt%, or at least 28 wt%, or at least 29 wt%, or at least 30 wt%, or at least 31 wt%, or at least 32 wt%, or at least 33 wt%, or at least 34 wt%, or at least 35 wt%, or at most 50 wt%, or at most 49 wt%, or at most 48 wt%, or at most 47 wt%, or at most 46 wt%, or at most 45 wt%, or at most 44 wt%, or at most 43 wt%, or at most 42 wt%, or at most 41 wt%, or at most 40 wt%, or at most 39 wt%, or at most 38 wt%, or at most 37 wt%, or at most 36 wt%, or at most 35 wt%, or at most 34 wt%, of the PPS polymer.

The composition includes an at least partially hydrogenated hydrocarbon polymer. A partially hydrogenated hydrocarbon polymer includes aromatic ring structures and unsaturated bonds. Fully hydrogenated hydrocarbon polymers have substantially less unsaturated bonds or aromatic ring structures. As used herein, "partially hydrogenated" means that the hydrocarbon polymer has a hydrogenation level of at least 60% and "fully hydrogenated" means that the hydrocarbon resin has a hydrogenation level of at least 90%, or at least 95%, or at least 96%, or at least 97%, or at least 98%, or at least 99%. In a specific aspect the at least partially hydrogenated hydrocarbon polymer has a hydrogenation level of at least 90%.

Exemplary hydrogenated hydrocarbon polymers include, but are not limited to, the fully hydrogenated alicyclic hydrocarbon resin available from Arakawa Chemical Inc. under the trademark Arkon® and sold, depending on softening point, as Arkon® P140, P125, P115, P100, P90, P70 or the partially hydrogenated hydrocarbon polymers sold as Arkon® M135, M115, M100 and M90.

In particular aspects the at least partially hydrogenated hydrocarbon polymer has the chemical formula:

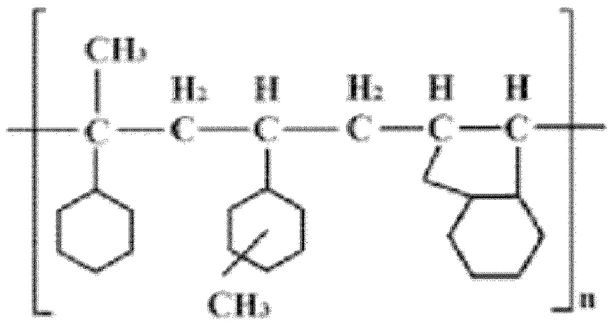

wherein n is an integer of from 2 to 8, such as 2, 3, 4, 5, 6, 7 or 8. In a particular aspect n is 3. Such polymers are, for example, available from Arakawa Chemical Industries, under the tradename Arkon™, having a number average molecular weight of about 1150 g/mol, determined by a GPC (gel permeation chromatography) method. The softening point of the polymer preferably is in a range between 70 °C and 150 °C, measured according to ASTM E28-67. It can be odorless and colorless, and have good weather resistance.

In further aspects the at least partially hydrogenated hydrocarbon polymer includes a hydrogenated cycloaliphatic resin, a hydrogenated aliphatic resin, a hydrogenated aromatic resin, or a combination thereof.

The composition includes from about 0.1 wt% to about 15 wt% of the at least partially hydrogenated hydrocarbon polymer. In specific aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at least 1.5 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or no more than 15 wt%, or no more than 14 wt%, or no more than 13 wt%, or no more than 12 wt%, or no more than 11 wt%, or no more than 10 wt%, or no more than 9 wt%, or no more than 8 wt%, or no more than 7 wt%, or no more than 6 wt%, or no more than 5 wt%, or no more than 4 wt%, or no more than 3 wt%, or no more than 2 wt%, of the at least partially hydrogenated hydrocarbon polymer.

The composition includes from about 25 wt% to about 50 wt% of a magnesium hydroxide filler which is surface treated with an organosilane-based coating and which has a primary average particle size of no more than 2 μm. Average particle size is determined by scanning electron microscopy. In other aspects the magnesium hydroxide filler has a primary average particle size of no more than 1.9 μm, or no more than 1.8 μm, or no more than 1.7 μm, or no more than 1.6 μm, or no more than 1.5 μm, or no more than 1.4 μm, or no more than 1.3 μm, or no more than 1.2 μm, or no more than 1.1 μm, or no more than 1.0 μm, or at least 0.1 μm, or at least 0.2 μm, or at least 0.3 μm, or at least 0.4 μm, or at least 0.5 μm, or at least 0.6 μm, or at least 0.7 μm, or at least 0.8 μm, or at least 0.9 μm.

In a specific aspect the organosilane-based coating is an amino-silane coating. An exemplary magnesium hydroxide filler suitable for compositions according to aspects of the disclosure is the 5P-C magnesium hydroxide, available from Kisuma.

In further aspects the composition includes at least 25 wt%, or at least 26 wt%, or at least 27 wt%, or at least 28 wt%, or at least 29 wt%, or at least 30 wt%, or at least 31 wt%, or at least 32 wt%, or at least 33 wt%, or at least 34 wt%, or at least 35 wt%, or at least 36 wt%, or at least 37 wt%, or at least 38 wt%, or at least 39 wt%, or at least 40 wt%, or at least 41 wt%, or at least 42 wt%, or at least 43 wt%, or at least 44 wt%, or at least 45 wt%, or at most 50 wt%, or at most 49 wt%, or at most 48 wt%, or at most 47 wt%, or at most 46 wt%, or at most 45 wt%, or at most 44 wt%, or at most 43 wt%, or at most 42 wt%, or at most 41 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, of the magnesium hydroxide filler.

The reinforcing fibrous filler may include, but is not limited to, glass fibers, aramid fibers, wollastonite, ceramic fibers, potassium titanate whiskers, zinc oxide whiskers, calcium sulfate whiskers, barium sulfate whiskers, or a combination thereof. In a specific aspect the reinforcing fibrous filler includes glass fibers.

In a particular aspect the composition does not include a carbon-based conductive filler such as carbon fiber. Carbon fibers and other carbon-based conductive fillers such as graphite or carbon nanotubes/carbon nanostructures contribute to conductive pathway formation and breakdown under even low voltage; compositions including these fillers would not be expected to achieve desired CTI properties.

The composition includes from about 20 wt% to about 40 wt% of a reinforcing fibrous filler in some aspects. In other aspects the composition includes at least 20 wt%, or at least 21 wt%, or at least 22 wt%, or at least 23 wt%, or at least 24 wt%, or at least 25 wt%, or at least 26 wt%, or at least 27 wt%, or at least 28 wt%, or at least 29 wt%, or at least 30 wt%, or at least 31 wt%, or at least 32 wt%, or at least 33 wt%, or at least 34 wt%, or at least 35 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, or at most 29 wt%, or at most 28 wt%, or at most 27 wt%, or at most 26 wt%, or at most 25 wt%, of the reinforcing fibrous filler.

In further aspects the composition includes from about 0.5 wt% to about 10 wt% of an impact modifier, an elastomer, or a combination thereof. The impact modifier or elastomer may include, but is not limited to, an ethylene-propylene elastomer, a maleic anhydride grafted polyethylene, a maleic anhydride functionalized copolymer; an E-GMA (ethylene glycidyl methacrylate) copolymers, an ethylene-alkyl acrylate-GMA terpolymer, an ethylene-vinyl acetate-GMA terpolymer, a methylmethacrylate-butadiene-styrene (MBS) terpolymer, styrene-butadiene-styrene (SBS), styrene-ethylene-butadiene-styrene (SEBS), a silicone-acrylic type elastomer, or a combination thereof.

In specific aspects the composition includes at least 0.5 wt%, or at least 1 wt%, or at least 1.5 wt%, or at least 2 wt%, or at least 2.5 wt%, or at least 3 wt%, or at least 4 wt%, or at least 5 wt%, or at least 6 wt%, or at least 7 wt%, or at least 8 wt%, or at least 9 wt%, or at most 10 wt%, or at most 9 wt%, or at most 8 wt%, or at most 7 wt%, or at most 6 wt%, or at most 5 wt%, or at most 4 wt%, or at most 3.5 wt%, of the impact modifier, elastomer, or combination thereof. In a particular aspect the composition includes at most 5 wt% of an impact modifier.

Compositions according to aspects of the disclosure may further include from greater than 0 wt% to about 10 wt% of at least one additional additive. The at least one additional additive may include, but is not limited to, an anti-dripping agent, antioxidant, antistatic agent, chain extender, colorant, mold release agent, flow promoter, lubricant, plasticizer, quenching agent, organosilane coupling agent, flame retardant, UV stabilizer, nucleating agent, or a combination thereof.

In specific aspects the composition include an organosilane coupling agent. The organosilane coupling agent may improve bonding between the PPS polymer and the reinforcing fibrous filler (e.g., glass fiber). Exemplary organosilane coupling agents include, but are not limited to, beta-(3,4-epoxycyclohexyl)ethyltrimethoxysilane (e.g., Silquest A-186 available from Momentive) and/or gamma-mercaptopropyltrimethoxysilane (e.g., Silquest A-189 available from Momentive).

In certain aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1.0 wt%, or at least 1.5 wt%, or at least 2 wt%, or at least 2.5 wt%, or at least 3 wt%, or at least 3.5 wt%, or at least 4 wt%, or at least 4.5 wt%, or at least 5 wt%, or at least 5.5 wt%, or at least 6 wt%, or at least 6.5 wt%, or at least 7 wt%, or at least 7.5 wt%, or at least 8 wt%, or at least 8.5 wt%, or at least 9 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1.5 wt%, or at most 1.4 wt%, or at most 1.3 wt%, or at most 1.2 wt%, or at most 1.1 wt%, or at most 1 wt%, or at most 0.9 wt%, or at most 0.8 wt%, or at most 0.7 wt%, or at most 0.6 wt%, or at most 0.5 wt%, or at most 0.4 wt%, of the at least one additional additive.

Compositions according to aspects of the disclosure have good comparative tracking index (CTI) properties. In some aspects the composition has a comparative tracking index (CTI) value of 600 volts (600V) as tested in accordance with ASTM D3638 using a sample with a minimum diameter of 40 mm (millimeters) and a thickness of 3 mm.

In further aspects the composition has a notched Izod impact (NII) strength of at least 7.0 $kJ/m^2$ (kilojoules per square meter) as measured in accordance with ISO-180 at a temperature of 23 °C. In specific aspects the composition has a NII strength of at least 7.0 $kJ/m^2$, or at least 7.1 $kJ/m^2$, or at least 7.2 $kJ/m^2$, or at least 7.3 $kJ/m^2$, or at least 7.4 $kJ/m^2$, or at least 7.5 $kJ/m^2$, or at least 7.6 $kJ/m^2$, or at least 7.7 $kJ/m^2$, or at least 7.8 $kJ/m^2$, or at least 7.9 $kJ/m^2$, or at least 8 $kJ/m^2$, or at least 8.1 $kJ/m^2$, or at least 8.2 $kJ/m^2$, or at least 8.3 $kJ/m^2$, or at least 8.4 $kJ/m^2$, or at least 8.5 $kJ/m^2$, or at least 8.6 $kJ/m^2$, or at least 8.7 $kJ/m^2$, or at least 8.8 $kJ/m^2$, or at least 8.9 $kJ/m^2$, or at least 9 $kJ/m^2$, or at least 9.1 $kJ/m^2$, or at most 12 $kJ/m^2$, or at most 11.5 $kJ/m^2$, or at most 11 $kJ/m^2$, or at most 10.5 $kJ/m^2$, or at most 10 $kJ/m^2$, or at most 9.5 $kJ/m^2$, as measured in accordance with ISO-180 at a temperature of 23 °C.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones,

tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a component of a high voltage connector, power module, switch, breaker, voltage or current transformer, regulator, rectifier, invertor, busbar, or insulated-gate bipolar transistor (IGBT) housing.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

a) from about 20 wt% to about 50 wt% of a PPS (polyphenylene sulfide) polymer;
b) from about 0.1 wt% to about 15 wt% of an at least partially hydrogenated hydrocarbon polymer;
c) from about 25 wt% to about 50 wt% of a magnesium hydroxide filler which is surface treated with an organosilane-based coating, and which has a primary average particle size of no more than 2 μm, wherein average particle size is determined by scanning electron microscopy; and
d) from about 20 wt% to about 40 wt% of a reinforcing fibrous filler,

wherein the combined weight percent value of all components does not exceed 100 wt%, and all weight percent values are based on the total weight of the composition.

Aspect 2. The thermoplastic composition according to Aspect 1, wherein the PPS polymer comprises a linear PPS polymer, a branched PPS polymer, a cross-linked PPS polymer, or a combination thereof.

Aspect 3. The thermoplastic composition according to Aspect 1 or 2, wherein the PPS polymer has an MFR (melt flow rate) of from 100 g/cm$^3$ (grams per cubic centimeter) to 1000 g/cm$^3$ as tested in accordance with ASTM D1238 at a temperature of 315 °C and a load of 5 kg (kilograms).

Aspect 4. The thermoplastic composition according to any of Aspects 1 to 3, wherein the at least partially hydrogenated hydrocarbon polymer has a hydrogenation level of at least 90%.

Aspect 5. The thermoplastic composition according to any of Aspects 1 to 4, wherein the at least partially hydrogenated hydrocarbon polymer comprises a hydrogenated cycloaliphatic resin, a hydrogenated aliphatic resin, a hydrogenated aromatic resin, or a combination thereof.

Aspect 6. The thermoplastic composition according to any of Aspects 1 to 5, wherein the composition comprises from about 0.1 wt% to about 10 wt%, or from about 0.1 wt% to about 8 wt%, or from about 0.1 wt% to no more than 8 wt%, of the at least partially hydrogenated hydrocarbon polymer.

Aspect 7. The thermoplastic composition according to any of Aspects 1 to 6, wherein the at least partially hydrogenated hydrocarbon polymer has the chemical formula:

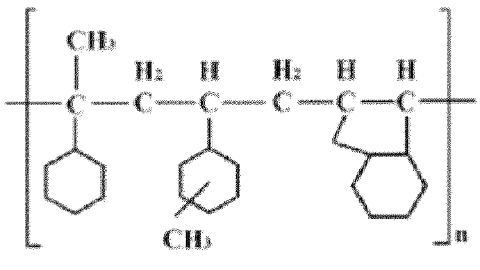

wherein n is an integer of from 2 to 8.

Aspect 8. The thermoplastic composition according to any of Aspects 1 to 7, wherein the reinforcing fibrous filler comprises glass fibers, aramid fibers, wollastonite, ceramic fibers, potassium titanate whiskers, zinc oxide whiskers, calcium sulfate whiskers, barium sulfate whiskers, or a combination thereof.

Aspect 9. The thermoplastic composition according to Aspect 8, wherein the composition does not comprise carbon fiber.

Aspect 10. The thermoplastic composition according to any of Aspects 1 to 9, wherein the composition comprises from about 25 wt% to about 35 wt% of the reinforcing fibrous filler.

Aspect 11. The thermoplastic composition according to any of Aspects 1 to 10, wherein the composition comprises from about 0.5 wt% to about 10 wt% of an impact modifier, an elastomer, or a combination thereof.

Aspect 12. The thermoplastic composition according to Aspect 11, wherein the composition comprises at most 5

w% of an impact modifier.

Aspect 13. The thermoplastic composition according to Aspect 11 or 12, wherein the impact modifier or elastomer comprises an ethylene-propylene elastomer, a maleic anhydride grafted polyethylene, a maleic anhydride functionalized copolymer; an E-GMA (ethylene glycidyl methacrylate) copolymers, an ethylene-alkyl acrylate-GMA terpolymer, an ethylene-vinyl acetate-GMA terpolymer, a methylmethacrylate-butadiene-styrene (MBS) terpolymer, styrene-butadiene-styrene (SBS), styrene-ethylene-butadiene-styrene (SEBS), a silicone-acrylic type elastomer, or a combination thereof.

Aspect 14. The thermoplastic composition according to any of Aspects 1 to 13, wherein the composition comprises from greater than 0 wt% to about 10 wt% of at least one additional additive.

Aspect 15. The thermoplastic composition according to Aspect 14, wherein the at least one additional additive comprises an anti-dripping agent, antioxidant, antistatic agent, chain extender, colorant, mold release agent, flow promoter, lubricant, plasticizer, quenching agent, organosilane coupling agent, flame retardant, UV stabilizer, nucleating agent, or a combination thereof.

Aspect 16. The thermoplastic composition according to any of Aspects 1 to 15, wherein the composition has a comparative tracking index (CTI) value of 600 volts (600V) as tested in accordance with ASTM D3638 using a sample with a minimum diameter of 40 mm (millimeters) and a thickness of 3 mm.

Aspect 17. The thermoplastic composition according to any of Aspects 1 to 16, wherein the composition has a notched Izod impact strength of at least 7.0 $kJ/m^2$ (kilojoules per square meter) as measured in accordance with ISO-180 at a temperature of 23 °C.

Aspect 18. An article comprising the thermoplastic composition according to any of Aspects 1 to 17.

Aspect 19. The article according to Aspect 18, wherein the article is a component of a high voltage connector, power module, switch, breaker, voltage or current transformer, regulator, rectifier, invertor, busbar, or insulated-gate bipolar transistor (IGBT) housing.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative and example compositions described herein included one or more of the components recited in Table 1:

**Table 1 - Components**

| Component | Description | Supplier |
|---|---|---|
| PPS-1 | Polyphenylene sulfide resin, NHU-3450 | Zhejiang NHU |
| PPS-2 | Polyphenylene sulfide resin, NHU-3470 | Zhejiang NHU |
| GF | Chopped strand E-glass fiber, ECS4F-03-584 | JUSHI |
| MDH-1 | Surface treated magnesium hydroxide, fatty acid coating, average particle size of 0.9-1.0 μm, Kisuma 5A-C | KISUMA |
| MDH-2 | Magnesium hydroxide, non-coating, average particle size of 0.9-1.0 μm, Kisuma 5C | KISUMA |
| MDH-3 | Surface treated magnesium hydroxide, amino-silane coating, average particle size of 0.9-1.0 μm, Kisuma 5P-C | KISUMA |
| MDH-4 | Surface treated magnesium hydroxide, amino-silane coating, average particle size of 2-5 μm, MAGNIFN-H5IV | Albemarle |
| P-140 | Fully hydrogenated hydrocarbon polymer, Arkon™ P-140 | Arakawa Chemical Industries |
| AX8840 | Ethylene glycidyl methacrylate (E-GMA) elastomer, Lotader® AX8840, impact modifier | Arkema |

(continued)

| Component | Description | Supplier |
|---|---|---|
| S-2200 | Silicone-acrylic type elastomer (SAE-2), Metablen S-2200, impact modifier | Mitsubishi |
| CB | Carbon black, BLACK PEARLS® 800 | CABOT |
| Silane-1 | Beta-(3,4-epoxycyclohexyl)ethyltrimethoxysilane, Silquest A-186, coupling agent (resin and glass bonding agent) | Momentive |
| Silane-2 | Gamma-mercaptopropyltrimethoxysilane, Silquest A-189, coupling agent (resin and glass bonding agent) | Momentive |
| AO-1 | Anti-oxidant, S-9228 | DOVERPHOS |
| AO-2 | Anti-oxidant, Irganox 1010 | BASF |
| MR | Polyethylene, LLDPE mold release, DNDJ-0405 LLDPE | NIHON UNICAR |

Compositions described herein were compounded into pellets according to the extrusion conditions set forth in Table 2:

Table 2 - Compounding Conditions

| Parameter | Unit | Extrusion Condition |
|---|---|---|
| Compounder Type | | TEM-37BS |
| Barrel Size | mm | 1500 |
| Die | mm | 4 |
| Zone 1 Temp | °C | 90 |
| Zone 2 Temp | °C | 220 |
| Zone 3 Temp | °C | 270 |
| Zone 4 Temp | °C | 290 |
| Zones 5-12 Temp | °C | 310 |
| Die Temp | °C | 320 |
| Screw speed | rpm | 250-300 |
| Throughput | kg/hr | 30-40 |
| Torque | % | 40-60 |
| Melt temperature | °C | 310-340 |

In the described compositions, the PPS base resin, elastomers, at least partially hydrogenated hydrocarbon polymers, and other additives were fed from the main throat, while the magnesium hydroxide fillers and glass fiber were fed from 2 separate side feeders downstream. The actual melting temperatures were controlled in a range of 310 °C to 340 °C for the various compositions. The compounded pellets were injection molded according to the conditions set forth in Table 3:

**Table 3 - Molding Conditions**

| Parameters | Unit | Molding Condition |
|---|---|---|
| Pre-drying time | Hour | 4 |
| Pre-drying temp | °C | 120 |
| Hopper temp | °C | 50 |
| Zone 1 temp | °C | 290 |
| Zones 2-3 temp | °C | 310 |

(continued)

| Parameters | Unit | Molding Condition |
|---|---|---|
| Zone 4 and nozzle temp | °C | 320 |
| Mold temp | °C | 140-160 |
| Screw speed | rpm | 100 |
| Back pressure | $kgf/cm^2$ | 30 |
| Cooling time | s | 20-30 |
| Injection speed | mm/s | 70-150 |
| Holding pressure | $kgf/cm^2$ | 600-1000 |
| Max. Injection pressure | $kgf/cm^2$ | 800-1500 |

Comparative compositions were prepared and tested as set forth in Table 4:

**Table 4 - Comparative Compositions**

| Component | | Unit | C1 | C2 | C3 | C4 | C5 | C6 |
|---|---|---|---|---|---|---|---|---|
| PPS-1 | | % | 28.9 | 25.9 | 25.9 | 25.9 | 28.9 | 23.9 |
| PPS-2 | | % | 10 | 10 | 10 | 10 | 10 | 10 |
| GF | | % | 30 | 30 | 20 | 40 | 30 | 30 |
| MDH-1 | | % | 30 | 30 | 40 | 20 | 25 | 30 |
| AX8840 | | % | 0 | 3 | 3 | 3 | 5 | 5 |
| CB | | % | 0.3 | 0.3 | 0.3 | 0.3 | 0.3 | 0.3 |
| Silane-1 | | % | 0.3 | 0.3 | 0.3 | 0.3 | 0.3 | 0.3 |
| AO-1 | | % | 0.1 | 0.1 | 0.1 | 0.1 | 0.1 | 0.1 |
| AO-2 | | % | 0.1 | 0.1 | 0.1 | 0.1 | 0.1 | 0.1 |
| MR | | % | 0.3 | 0.3 | 0.3 | 0.3 | 0.3 | 0.3 |
| **Property** | **Test Method** | **Unit** | **C1** | **C2** | **C3** | **C4** | **C5** | **C6** |
| Notched Izod | ISO-180 | $kJ/m^2$ | 4.1 | 5.2 | 3.8 | 7.2 | 6.5 | 5.8 |
| Unnotched Izod | ISO-180 | $kJ/m^2$ | 7.9 | 12.7 | 9.4 | 17.5 | 16.4 | 14.5 |
| HDT @ 1.8MPa | ISO-75 | °C | 260 | 260 | 247 | 266 | 260 | 260 |
| Flexural Modulus | ISO-178 | MPa | 15560 | 15695 | 14608 | 17030 | 14108 | 14805 |
| Flexural Strength | ISO-178 | MPa | 100 | 113 | 96 | 154 | 138 | 129 |
| Tensile Modulus | ISO-527 | MPa | 13900 | 15327 | 13650 | 17337 | 14570 | 14903 |
| Tensile Strength | ISO-527 | MPa | 66 | 80 | 66 | 101 | 97.5 | 86.5 |
| Strain at Break | ISO-527 | % | 0.7 | 0.8 | 0.7 | 1.1 | 1.2 | 1 |
| CTI | ASTM D3638 | V | 295 | 316 | 486 | 269 | 250 | 338 |

Properties were evaluated according to the indicated test method. "HDT" refers to heat distortion temperature. "Izod" refers to Izod impact strength (notched or unnotched as indicated), and is evaluated in accordance with ISO-180 at a temperature of 23 °C. CTI (comparative tracking index) is an index for electrical insulating materials which is defined as the numerical value of the voltage (V) which will cause failure by tracking when the number of drops of contaminant required to cause failure is equal to 50. CTI was evaluated according to ASTM D3638 using a sample with a minimum diameter of 40 mm and a thickness of 3 mm.

Table 4 shows formulations and test results of a group of high tracking resistance PPS comparative examples; the compositions included 20-40 wt% magnesium hydroxide treated with fatty acid (MDH-1) as the primary component to

increase CTI. Chopped strand E-glass fibers (GF) were included for mechanical strength reinforcement. From the results it was observed that Comparative composition C1-which did not include an impact modifier-had a CTI value of only 295V and poor notched Izod impact strength of 4.1 kJ/$m^2$. E-GMA elastomers have been widely accepted as a good impact modifier for PPS resins and are known to improve tracking resistance due to its polyethylene backbones. Accordingly, 3 wt% or 5 wt% E-GMA elastomer (AX8840) was added to compositions C2 and C6, respectively. It can be seen that the impact strength, flexural and tensile strength, and strain at break were improved as the E-GMA concentration increased. However, the tracking resistance performance of C2 and C6 was not significantly improved.

At the same level of total filler loading, comparative composition C3 included 20 wt% E-glass fiber and 40 wt% MDH-1, while composition C4 included 40 wt% E-glass fiber and 20 wt% MDH-1. It was observed that by increasing magnesium hydroxide content to 40 wt%, the tracking resistance was considerably improved to 486V, while the mechanical strength further decreased compared to composition C2. Composition C4, however, had greatly improved mechanical properties, but the CTI performance was only 269V. These results indicate that the contribution to improved tracking resistance was due mainly to the magnesium hydroxide component, while the contribution of mechanical performance such as tensile and impact strength resulted from the inclusion of glass fiber. From these results, it is seen that it is difficult to balance high CTI and impact properties in compositions having high filler loading. Compositions having a total filler loading of 60 wt%, for example, have good mechanical toughness but poor tracking resistance; additionally it is difficult to extrude compositions having this high filler loading. With filler loading decreased by 5 wt% composition C5 had a CTI value of only 250V as compared to C6 with a CTI of 338V, although impact strength and other mechanical properties were improved as compared to C6.

Summarizing the results, the Table 4 compositions including glass fiber and magnesium hydroxide filler did not have a desired combination of good CTI and impact performance. Additional comparative compositions were prepared to evaluate whether other types of magnesium hydroxide filler would affect the results; compositions were prepared and tested as set forth in Table 5:

**Table 5 - Comparative Compositions**

| Component | | Unit | C7 | C8 | C9 | C10 | C11 |
|---|---|---|---|---|---|---|---|
| PPS-1 | | % | 5 | 5 | 5 | 5 | 5 |
| PPS-2 | | % | 27.9 | 27.9 | 27.9 | 27.9 | 27.9 |
| GF | | % | 28 | 28 | 28 | 28 | 28 |
| MDH-1 | | % | 35 | | | | |
| MDH-2 | | % | | 35 | | | |
| MDH-3 | | % | | | 35 | | 35 |
| MDH-4 | | % | | | | 35 | |
| AX8840 | | % | 3 | 3 | 3 | 3 | 3 |
| CB | | % | 0.3 | 0.3 | 0.3 | 0.3 | 0.3 |
| Silane-1 | | % | 0.3 | 0.3 | 0.3 | 0.3 | |
| Silane-2 | | % | | | | | 0.3 |
| AO-1 | | % | 0.1 | 0.1 | 0.1 | 0.1 | 0.1 |
| AO-2 | | % | 0.1 | 0.1 | 0.1 | 0.1 | 0.1 |
| MR | | % | 0.3 | 0.3 | 0.3 | 0.3 | 0.3 |
| **Property** | **Test Method** | **Unit** | **C7** | **C8** | **C9** | **C10** | **C11** |
| Notched Izod | ISO-180 | kJ/$m^2$ | 5.0 | 5.4 | 5.2 | 5 | 6.2 |
| Unnotched Izod | ISO-180 | kJ/$m^2$ | 10.4 | 13.3 | 12.4 | 12.2 | 14.7 |
| HDT @ 1.8MPa | ISO-75 | °C | 262 | 261 | 263 | 262 | 265 |
| Flexural Modulus | ISO-178 | MPa | 14883 | 15547 | 16221 | 15012 | 14568 |
| Flexural Strength | ISO-178 | MPa | 103 | 145.5 | 142 | 143.5 | 153 |
| Tensile Modulus | ISO-527 | MPa | 15640 | 17150 | 17756 | 16570 | 14570 |
| Tensile Strength | ISO-527 | MPa | 71 | 97 | 92 | 96 | 98 |

(continued)

| Property | Test Method | Unit | C7 | C8 | C9 | C10 | C11 |
|---|---|---|---|---|---|---|---|
| Strain at Break | ISO-527 | % | 0.7 | 0.9 | 0.9 | 0.95 | 1.0 |
| CTI | ASTM D3638 | V | 475 | 426 | 484 | 418 | 483 |

The PPS-based compositions in Table 5 include E-glass fiber and various types of magnesium hydroxide. Compositions C7-C10 respectively include magnesium hydroxide with an average particle size of 0.9-1.0 μm coated with fatty acid (MDH-1), magnesium hydroxide with an average particle size of 0.9-1.0 μm without a coating treatment (MDH-2), magnesium hydroxide with an average particle size of 0.9-1.0 μm coated with amino-silane (MDH-3), and magnesium hydroxide with an average particle size larger than 2.0 μm coated with amino-silane (MDH-4). At the same average particle size of 0.9-1.0 μm, composition C8 including MDH-2 without a coating treatment had the lowest CTI value, about 50V lower than the other two magnesium hydroxide components used in compositions C7 and C9. On the other hand, composition C7 including MDH-1 with a fatty acid coating had the worst mechanical properties in terms of notched and unnotched impact strength, flexural strength, tensile strength, and strain at break, demonstrating the poor compatibility between PPS resin and the fatty acid-coated MDH-1. From the results, it is observed that a magnesium hydroxide coated with an amino-silane coupling agent (MDH-3) may be the most suitable choice for PPS compositions in which high tracking resistance and mechanical performance is desired.

Comparative example C10 helps to show the effect of magnesium hydroxide average particle size on CTI. The magnesium hydroxide used in C10 (MDH-4) has the same amino-silane surface treatment as the magnesium hydroxide in composition C9 (MDH-3), but has a larger particle size of 2-5 μm as observed from scanning electron microscopy (SEM) images. Composition C10 has similar impact strength, HDT, flexural and tensile properties as C9, but the CTI of composition C10 was significantly lower at 418V, indicating that magnesium hydroxide particle size may be relevant to CTI performance.

The results in Table 5 further show that improved mechanical performance can be achieved for composition C11 by using gamma-mercaptopropyltrimethoxysilane (Silane-2) to replace beta-(3,4-epoxycyclohexyl)ethyltrimethoxysilane (Silane-1); compare composition C11 to composition C9. One reason for this result could be the reduced melting temperature and melt viscosity of composition C11, which contributes to higher glass fiber retention, since the mercapto group in Silane-2 is less chemically active than the epoxy group in Silane-1 to form a chemical bond with the PPS terminal groups. Very little difference in tracking performance was observed with the use of a different silane coupling agent; compare the CTI values of composition C11 to C9.

Accordingly, from the data it Table 5 it can be concluded that the tracking resistance of the prepared PPS compositions largely depends on the surface treatment and average particle size of magnesium hydroxide, and mechanical performance is independent of average particle size but affected by surface treatment. From these observations, it was determined that a magnesium hydroxide having an amino-silane surface treatment and average particle size of 0.9-1.0 μm (MDH-3) would be used for the example compositions described herein.

Additional comparative and example compositions were prepared and tested as shown in Table 6:

**Table 6 - Comparative and Example Compositions**

| Component | Unit | C9 | C12 | C13 | E1 | E2 | E3 | E4 | E5 |
|---|---|---|---|---|---|---|---|---|---|
| PPS-1 | % | 5 | 5 | 5 | 5 | 5 | 5 | 5 | 5 |
| PPS-2 | % | 27.9 | 27.9 | 25.9 | 22.9 | 22.9 | 22.9 | 22.9 | 23.9 |
| GF | % | 28 | 28 | 28 | 28 | 28 | 28 | 30 | 30 |
| MDH-3 | % | 35 | 35 | 35 | 35 | 35 | 35 | 33 | 33 |
| AX8840 | % | 3 | | 0 | | 3 | | | |
| S-2200 | % | | 3 | 0 | 3 | | 3 | 3 | 3 |
| P-140 | % | 0 | 0 | 5 | 5 | 5 | 5 | 5 | 4 |
| CB | % | 0.3 | 0.3 | 0.3 | 0.3 | 0.3 | 0.3 | 0.3 | 0.3 |
| Silane-1 | % | 0.3 | 0.3 | 0.3 | 0.3 | 0.3 | | | |
| Silane-2 | % | | | | | | 0.3 | 0.3 | 0.3 |
| AO-1 | % | 0.1 | 0.1 | 0.1 | 0.1 | 0.1 | 0.1 | 0.1 | 0.1 |
| AO-2 | % | 0.1 | 0.1 | 0.1 | 0.1 | 0.1 | 0.1 | 0.1 | 0.1 |

(continued)

| Component | | Unit | C9 | C12 | C13 | E1 | E2 | E3 | E4 | E5 |
|---|---|---|---|---|---|---|---|---|---|---|
| MR | | % | 0.3 | 0.3 | 0.3 | 0.3 | 0.3 | 0.3 | 0.3 | 0.3 |
| **Property** | **Test Method** | **Unit** | **C9** | **C12** | **C13** | **E1** | **E2** | **E3** | **E4** | **E5** |
| Notched Izod | ISO-180 | kJ/m$^2$ | 5.2 | 5.8 | 6.1 | 8.0 | 8.3 | 8.2 | 8.5 | 7.9 |
| Unnotched Izod | ISO-180 | kJ/m$^2$ | 12.4 | 13 | 13.4 | 15.6 | 12.8 | 16.9 | 18.5 | 16.8 |
| HDT @ 1.8MPa | ISO-75 | °C | 263 | 267 | 264 | 263 | 262 | 262 | 264 | 264 |
| Flexural Modulus | ISO-178 | MPa | 16221 | 16486 | 16839 | 15834 | 15362 | 15736 | 16200 | 16066 |
| Flexural Strength | ISO-178 | MPa | 142 | 152 | 151 | 154 | 143 | 155 | 162 | 158 |
| Tensile Modulus | ISO-527 | MPa | 17756 | 17823 | 18563 | 17288 | 16054 | 17317 | 16908 | 17028 |
| Tensile Strength | ISO-527 | MPa | 92 | 93 | 101 | 96 | 94 | 98 | 102 | 99 |
| Strain at Break | ISO-527 | % | 0.9 | 0.9 | 0.9 | 1 | 1 | 1.1 | 1 | 1.2 |
| CTI | ASTM D3638 | V | 484 | 491 | 576 | 600 | 600 | 600 | 600 | 600 |

In an attempt to improve CTI properties, an at least partially hydrogenated hydrocarbon polymer-which generates lower char residues than the PPS resin under a high voltage-was evaluated. In addition, the at least partially hydrogenated hydrocarbon polymer can function as a flow promoter for PPS, which could decrease melt viscosity and shear during the compounding process and result in a higher glass fiber retention.

As shown in Table 6, 5 wt% of the hydrogenated hydrocarbon polymer was included in example compositions E1 and E2. Unexpectedly, both the CTI value and impact strength were substantially improved compared to compositions C9 and C12; the CTI of composition E1 was 600V, which is the maximum level for thermoplastics. Additionally, the notched Izod impact strength of example composition E1 increased to 8 kJ/m$^2$. Similar tracking resistance and mechanical performance was also observed for example composition E3 which included the gamma-mercaptopropyltrimethoxysilane (Silane-2) additive.

Example compositions E4 and E5 had a slightly lower magnesium hydroxide content of 33 wt%, but still achieved a high tracking resistance (CTI value of 600V) and good impact strength of 8.5 kJ/m$^2$ and 7.9 kJ/m$^2$, respectively. From the results in Table 6 it is observed that an at least partially hydrogenated hydrocarbon polymer may be included in the PPS composition to improve CTI performance in the compositions.

Further comparative and example compositions were prepared and tested as shown in Table 7:

**Table 7 - Comparative and Example Compositions**

| Component | | Unit | E6 | E7 | E8 | C14 | C15 |
|---|---|---|---|---|---|---|---|
| PPS-1 | | % | 5 | 5 | 5 | 5 | 5 |
| PPS-2 | | % | 27.9 | 22.9 | 19.9 | 25.9 | 21.9 |
| GF | | % | 20 | 30 | 40 | 15 | 44 |
| MDH-3 | | % | 40 | 35 | 28 | 45 | 23 |
| S-2200 | | % | 3 | 3 | 3 | 5 | 2 |
| P-140 | | % | 3 | 3 | 3 | 3 | 3 |
| CB | | % | 0.3 | 0.3 | 0.3 | 0.3 | 0.3 |
| Silane-2 | | % | 0.3 | 0.3 | 0.3 | 0.3 | 0.3 |
| AO-1 | | % | 0.1 | 0.1 | 0.1 | 0.1 | 0.1 |
| AO-2 | | % | 0.1 | 0.1 | 0.1 | 0.1 | 0.1 |
| MR | | % | 0.3 | 0.3 | 0.3 | 0.3 | 0.3 |
| **Property** | **Test Method** | **Unit** | **E6** | **E7** | **E8** | **C14** | **C15** |
| Notched Izod | ISO-180 | kJ/m$^2$ | 8 | 8.2 | 9.2 | 5.9 | 9.1 |
| Unnotched Izod | ISO-180 | kJ/m$^2$ | 13.8 | 15.1 | 17.6 | 11 | 19.6 |

(continued)

| Property | Test Method | Unit | E6 | E7 | E8 | C14 | C15 |
|---|---|---|---|---|---|---|---|
| HDT @ 1.8MPa | ISO-75 | °C | 258 | 262 | 265 | 238 | 268 |
| Flexural Modulus | ISO-178 | MPa | 13845 | 15902 | 16892 | 11277 | 17232 |
| Flexural Strength | ISO-178 | MPa | 127 | 155 | 172 | 106 | 189 |
| Tensile Modulus | ISO-527 | MPa | 14839 | 16286 | 17517 | 12460 | 18265 |
| Tensile Strength | ISO-527 | MPa | 83 | 104 | 121 | 74 | 128 |
| Strain at Break | ISO-527 | % | 1.0 | 1.2 | 1.1 | 0.9 | 1.1 |
| CTI | ASTM D3638 | V | 600 | 600 | 600 | 600 | 482 |

Example compositions E7 to E9 included from 20-40 wt% glass fiber, and had a CTI value of 600V and impact strength of at least 8.0 kJ/$m^2$. With a glass fiber loading below 20 wt%, it was difficult to achieve high impact strength as shown in comparative composition C14. With a glass fiber loading greater than 40 wt%, the CTI value decreased due to a lower magnesium hydroxide (MDH) content; see comparative composition C15. Accordingly, in some aspects compositions according to aspects of the disclosure have a glass fiber content of from 20 wt% to 40 wt%, and in specific aspects from 25 wt% to 35 wt%.

Further example compositions were prepared and tested as shown in Table 8:

**Table 8 -Example Compositions**

| Component | | Unit | E9 | E10 | E11 | E12 | E13 | E14 |
|---|---|---|---|---|---|---|---|---|
| PPS-1 | | % | 8 | 8 | 8 | 8 | 8 | 8 |
| PPS-2 | | % | 19.9 | 19.9 | 19.9 | 19.9 | 19.9 | 19.9 |
| GF | | % | 30 | 30 | 30 | 30 | 30 | 30 |
| MDH-3 | | % | 36.5 | 33 | 28 | 37.5 | 26 | 28 |
| S-2200 | | % | 3 | 3 | 3 | 3 | 3 | 10 |
| P-140 | | % | 1.5 | 5 | 10 | 0.5 | 12 | 3 |
| CB | | % | 0.3 | 0.3 | 0.3 | 0.3 | 0.3 | 0.3 |
| Silane-2 | | % | 0.3 | 0.3 | 0.3 | 0.3 | 0.3 | 0.3 |
| AO-1 | | % | 0.1 | 0.1 | 0.1 | 0.1 | 0.1 | 0.1 |
| AO-2 | | % | 0.1 | 0.1 | 0.1 | 0.1 | 0.1 | 0.1 |
| MR | | % | 0.3 | 0.3 | 0.3 | 0.3 | 0.3 | 0.3 |
| **Property** | **Test Method** | **Unit** | **E9** | **E10** | **E11** | **E12** | **E13** | **E14** |
| Notched Izod | ISO-180 | kJ/$m^2$ | 8 | 8.7 | 8.1 | 7.2 | 7.5 | 10.7 |
| Unnotched Izod | ISO-180 | kJ/$m^2$ | 14.4 | 17.5 | 13.7 | 13.6 | 14.3 | 26.9 |
| HDT @ 1.8MPa | ISO-75 | °C | 264 | 263 | 252 | 264 | 246 | 210 |
| Flexural Modulus | ISO-178 | MPa | 16731 | 16494 | 14757 | 16692 | 13849 | 12406 |
| Flexural Strength | ISO-178 | MPa | 155 | 159 | 139 | 170 | 131 | 117 |
| Tensile Modulus | ISO-527 | MPa | 15793 | 15686 | 14262 | 16018 | 13346 | 11652 |
| Tensile Strength | ISO-527 | MPa | 108 | 105 | 88 | 111 | 82 | 65 |
| Strain at Break | ISO-527 | % | 0.9 | 1.1 | 0.9 | 1.0 | 0.7 | 1.5 |
| CTI | ASTM D3638 | V | 600 | 600 | 600 | 600 | 600 | 600 |

The compositions of Table 8 have varying hydrogenated hydrocarbon polymer content. As noted, the hydrogenated hydrocarbon polymer was shown to be efficient in increasing both impact strength and CTI values in the example

compositions. The at least partially hydrogenated hydrocarbon polymer partially functions as a flow promoter and can help reduce melt viscosity in the highly filled PPS compositions and contribute to good retention of glass fibers; this can contribute to compositions having improved impact strength, particularly combined with the use of impact modifier. As shown in Table 8, example compositions E9, E10, and E11 which include 1.5 wt%, 5 wt%, and 10 wt% respectively of a hydrogenated hydrocarbon polymer all have a CTI value of 600V and notched Izod impact strength above 8.0 $kJ/m^2$. It was noted that if the hydrogenated hydrocarbon polymer content is increased above 7 wt% certain mechanical properties and heat resistance of the composition will drop substantially; see example compositions E11 and E13. This may be due to the immiscible nature of the hydrogenated hydrocarbon polymer with the PPS resin. Similar observations can be made with example composition E14, which included 3 wt% hydrogenated hydrocarbon polymer and 10 wt% of impact modifiers-this composition had a high notched Izod impact strength and a CTI value of 600V, but other mechanical properties such as tensile and flexural strength and HDT were low. Additionally, in high voltage applications a flame retardancy UL 94 rating of V-0 may be needed. Accordingly, in some aspects the total content of impact modifier and at least partially hydrogenated hydrocarbon polymer should be no more than 12 wt%, or in some aspects no more than 11 wt%, or no more than 10 wt%, or no more than 9 wt%, or no more than 8 wt%. It should be noted, however, that even if certain mechanical properties and other properties of some of the example compositions in Table 8 are lower than those of other example compositions, these compositions still have good impact strength properties and CTI performance and thus may still be useful in certain applications.

From the results discussed herein it is concluded that PPS compositions with excellent tracking resistance, good impact strength, and high heat resistance may be provided based on the building blocks of PPS resin, surface treated magnesium hydroxide, an at least partially hydrogenated hydrocarbon polymer, an impact modifier, and a reinforced fiber (e.g., glass fiber). The present compositions differ from conventional PPS-based compositions, in that the compositions of the present disclosure include an at least partially hydrogenated hydrocarbon polymer that greatly improves the comparative tracking index (CTI) value of the compositions to 600V. Combined with an impact modifier, the PPS compositions described herein can also achieve a much higher impact strength than the conventional compositions, while maintaining a high heat resistance. Compositions according to aspects of the disclosure may be especially suitable for high voltage high power applications such as high voltage connectors, power modules, switches, breakers, voltage or current transformers, regulators, rectifiers, invertors, busbars, and insulated-gate bipolar transistors (IGBT) housings.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a) from about 20 wt% to about 50 wt% of a PPS (polyphenylene sulfide) polymer;
b) from about 0.1 wt% to about 15 wt% of an at least partially hydrogenated hydrocarbon polymer;
c) from about 25 wt% to about 50 wt% of a magnesium hydroxide filler which is surface treated with an organosilane-based coating, and which has a primary average particle size of no more than 2 $\mu$m, wherein average particle size is determined by scanning electron microscopy; and
d) from about 20 wt% to about 40 wt% of a reinforcing fibrous filler,

wherein the combined weight percent value of all components does not exceed 100 wt%, and all weight percent values are based on the total weight of the composition.

**2.** The thermoplastic composition according to claim 1, wherein the PPS polymer comprises a linear PPS polymer, a branched PPS polymer, a cross-linked PPS polymer, or a combination thereof.

**3.** The thermoplastic composition according to claim 1 or 2, wherein the PPS polymer has an MFR (melt flow rate) of from 100 g/cm$^3$ (grams per cubic centimeter) to 1000 g/cm$^3$ as tested in accordance with ASTM D1238 at a temperature of 315 °C and a load of 5 kg (kilograms).

**4.** The thermoplastic composition according to any of claims 1 to 3, wherein the at least partially hydrogenated hydrocarbon polymer has a hydrogenation level of at least 90%.

**5.** The thermoplastic composition according to any of claims 1 to 4, wherein the at least partially hydrogenated hydrocarbon polymer comprises a hydrogenated cycloaliphatic resin, a hydrogenated aliphatic resin, a hydrogenated aromatic resin, or a combination thereof.

**6.** The thermoplastic composition according to any of claims 1 to 5, wherein the composition comprises from about 0.1 wt% to about 10 wt%, or from about 0.1 wt% to about 8 wt%, or from about 0.1 wt% to no more than 8 wt%, of the at least partially hydrogenated hydrocarbon polymer.

**7.** The thermoplastic composition according to any of claims 1 to 6, wherein the at least partially hydrogenated hydrocarbon polymer has the chemical formula:

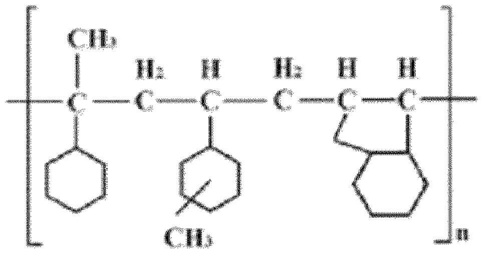

wherein n is an integer of from 2 to 8.

**8.** The thermoplastic composition according to any of claims 1 to 7, wherein the reinforcing fibrous filler comprises glass fibers, aramid fibers, wollastonite, ceramic fibers, potassium titanate whiskers, zinc oxide whiskers, calcium sulfate whiskers, barium sulfate whiskers, or a combination thereof.

**9.** The thermoplastic composition according to any of claims 1 to 8, wherein the composition comprises from about 25 wt% to about 35 wt% of the reinforcing fibrous filler.

**10.** The thermoplastic composition according to any of claims 1 to 9, wherein the composition comprises from about 0.5 wt% to about 10 wt% of an impact modifier, an elastomer, or a combination thereof.

**11.** The thermoplastic composition according to claim 10, wherein the impact modifier or elastomer comprises an ethylene-propylene elastomer, a maleic anhydride grafted polyethylene, a maleic anhydride functionalized copolymer; an E-GMA (ethylene glycidyl methacrylate) copolymers, an ethylene-alkyl acrylate-GMA terpolymer, an ethylene-vinyl acetate-GMA terpolymer, a methylmethacrylate-butadiene-styrene (MBS) terpolymer, styrene-butadiene-styrene (SBS), styrene-ethylene-butadiene-styrene (SEBS), a silicone-acrylic type elastomer, or a combination thereof.

**12.** The thermoplastic composition according to any of claims 1 to 11, wherein the composition comprises from greater than 0 wt% to about 10 wt% of at least one additional additive comprising an anti-dripping agent, antioxidant, antistatic agent, chain extender, colorant, mold release agent, flow promoter, lubricant, plasticizer, quenching agent, organosilane coupling agent, flame retardant, UV stabilizer, nucleating agent, or a combination thereof.

**13.** The thermoplastic composition according to any of claims 1 to 12, wherein the composition has a comparative tracking index (CTI) value of 600 volts (600V) as tested in accordance with ASTM D3638 using a sample with a minimum diameter of 40 mm (millimeters) and a thickness of 3 mm.

**14.** The thermoplastic composition according to any of claims 1 to 13, wherein the composition has a notched Izod impact strength of at least 7.0 kJ/m$^2$ (kilojoules per square meter) as measured in accordance with ISO-180 at a temperature

of 23 °C.

**15.** An article comprising the thermoplastic composition according to any of claims 1 to 14, wherein the article is a component of a high voltage connector, power module, switch, breaker, voltage or current transformer, regulator, rectifier, invertor, busbar, or insulated-gate bipolar transistor (IGBT) housing.

Europäisches Patentamt
European Patent Office
Office européen des brevets

# EUROPEAN SEARCH REPORT

Application Number
EP 24 18 9473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2023/407090 A1 (YUMIYAMA SHOHEI [JP] ET AL) 21 December 2023 (2023-12-21)<br>* table 1 *<br>* examples 1-4 *<br>* examples CE1-CE8 *<br>----- | 1-6,8-15<br><br>7 | INV.<br>C08L81/02<br>C08L53/02<br>C08K9/06<br>C08K7/14 |
| A | JP 2001 288363 A (POLYPLASTICS CO) 16 October 2001 (2001-10-16)<br>* claims 1-5 *<br>* tables 1-2 *<br>----- | 1-15 | |
| A | CN 115 895 261 A (SUZHOU NAPO ADVANCED MATERIAL TECH CO LTD) 4 April 2023 (2023-04-04)<br>* claims 1-14 *<br>* examples 1-5 *<br>----- | 1-15 | |
| A | WO 2013/046682 A1 (TORAY INDUSTRIES [JP]) 4 April 2013 (2013-04-04)<br>* claims 1-15 *<br>* tables 1-2 *<br>----- | 1-15 | TECHNICAL FIELDS SEARCHED (IPC)<br><br>C08K |

The present search report has been drawn up for all claims

1

| Place of search | Date of completion of the search | Examiner |
|---|---|---|
| The Hague | 12 December 2024 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 9473

This annex lists the patent family members relating to the patent documents cited in the above-mentioned European search report. The members are as contained in the European Patent Office EDP file on
The European Patent Office is in no way liable for these particulars which are merely given for the purpose of information.

12-12-2024

| Patent document cited in search report | Publication date | Patent family member(s) | Publication date |
|---|---|---|---|
| US 2023407090 A1 | 21-12-2023 | CN 116648484 A | 25-08-2023 |
| | | EP 4253481 A1 | 04-10-2023 |
| | | JP WO2022113710 A1 | 02-06-2022 |
| | | US 2023407090 A1 | 21-12-2023 |
| | | WO 2022113710 A1 | 02-06-2022 |
| JP 2001288363 A | 16-10-2001 | JP 4004741 B2 | 07-11-2007 |
| | | JP 2001288363 A | 16-10-2001 |
| CN 115895261 A | 04-04-2023 | NONE | |
| WO 2013046682 A1 | 04-04-2013 | CN 103827213 A | 28-05-2014 |
| | | CN 107383877 A | 24-11-2017 |
| | | EP 2762530 A1 | 06-08-2014 |
| | | JP 5273321 B1 | 28-08-2013 |
| | | JP WO2013046682 A1 | 26-03-2015 |
| | | KR 20140043846 A | 10-04-2014 |
| | | US 2014256864 A1 | 11-09-2014 |
| | | WO 2013046682 A1 | 04-04-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001288363 A
- WO 2013046682 A1
- JP 2019147943 A
- CN 115895261 A